# EUROPÄISCHE PATENTSCHRIFT

(11) **EP 1 605 293 B1**
(45) Veröffentlichungstag und Bekanntmachung des Hinweises auf die Patenterteilung: **16.04.2008**
(21) Anmeldenummer: 05012045.0
(22) Anmeldetag: 03.06.2005
(51) Int. Cl.: G02B 26/10

(54) **Vorrichtung zur Kennzeichnung von Gegenständen mit einem Laserstrahl**
Device for labelling of objects with a laser beam
Dispositif de marquage des objets avec un faiseau laser

(30) Priorität: 09.06.2004 DE 102004028066
(43) Veröffentlichungstag der Anmeldung: 14.12.2005
(73) Patentinhaber: Sator Laser GmbH, 22547 Hamburg (DE)
(72) Erfinder: Eckhardt, Ulrich, 22083 Hamburg (DE); Specker, Wilhelm, Dr., 20255 Hamburg (DE); Sator, Alexander P., 22299 Hamburg (DE)
(74) Vertreter: Hauck Patent- und Rechtsanwälte

(56) Entgegenhaltungen:
- WO-A-03/032046
- FR-A- 2 452 724
- LI Y ET AL: "LASER BEAM SCANNING BY ROTARY MIRRORS I. MODELING MIRROR-SCANNING DEVICES" APPLIED OPTICS, OPTICAL SOCIETY OF AMERICA,WASHINGTON, US, Bd. 34, Nr. 28, 1. Oktober 1995 (1995-10-01), Seiten 6403-6416, XP000528351 ISSN: 0003-6935

## Beschreibung

Die vorliegende Erfindung betrifft ein Verfahren und eine Vorrichtung zur Kennzeichnung von Gegenständen mit einem Laserstrahl.

Die Kennzeichnung von Verpackung, Etiketten und dergleichen erfolgt durch einen beweglichen Laserstrahl, der über das zu kennzeichnende Objekt geführt wird. Die Bewegung des Laserstrahls über das Objekt wird durch ein sogenanntes Scannermodul gesteuert, in dem der Laserstrahl durch ein Paar von Spiegeln abgelenkt wird. Die Spiegel sind drehbar um eine Achse gelagert und werden durch einen elektromechanischen Antrieb (Galvanometer) um ihre Drehachse gedreht. Dadurch wird die Ablenkrichtung des Laserstrahls geändert und durch eine Drehung um eine Achse wird der Laserstrahl örtlich eindimensional auf der Produktoberfläche bewegt. Die Bewegungsrichtung steht hierbei senkrecht zu der Achse des gedrehten Spiegels. Bei den bekannten Scannermodulen wird der Laserstrahl nacheinander über zwei solche verkippbaren Spiegel geführt und auf das Produkt gelenkt. Durch eine Überlagerung der beiden Bewegungen der Spiegel wird der Laserstrahl auf der Produktoberfläche entlang einer zweidimensionalen Kontur geführt, um die gewünschte Kennzeichnung auf dem Produkt vorzunehmen.

Im Stand der Technik ist es bekannt, die Spiegel rechtwinklig zueinander anzuordnen, so daß ein kartesisches Koordinatensystem entsteht, bei dem die Strahlauslenkung durch den ersten Spiegel in X-Richtung und die Strahlauslenkung des zweiten Spiegels in Y-Richtung erfolgt.

Aus WO 03/032046 A1 ist eine Projektionsvorrichtung bekannt, bei der die Spalten- und Zeilenfrequenz bzw. die vertikale und horizontale Ablenkfrequenz sich um weniger als eine Größenordnung voneinander unterscheiden. Hierdurch kann eine Störung der Projektion durch Resonanzfrequenzen und Eigenfrequenzen bei miniaturisierten Ablenkeinrichtungen vermieden werden.

Häufig werden sich bewegende Produkte gekennzeichnet, die an dem Scannermodul entlang der X-Richtung vorbeigeführt werden. Diese Kennzeichnungsart wird als "on-the-fly"-Kennzeichnung oder -Markierung bezeichnet. Durch die Bewegung des zu kennzeichnenden Produkts ist es erforderlich, daß der Laserstrahl während der Kennzeichnung dem Produkt folgt. Der Auslenkung des Laserstrahls zur Kennzeichnung des Produkts wird also eine weitere Bewegung in X-Richtung überlagert. Hierdurch ist die maximale Kennzeichnungsgeschwindigkeit für das Produkt in X-Richtung beschränkt, da das Galvanometer eine Maximalgeschwindigkeit besitzt.

Der Erfindung liegt die Aufgabe zugrunde, ein Verfahren und eine Vorrichtung zur Kennzeichnung von Produkten mit einem Laserstrahl bereitzustellen, die mit einfachen Mitteln eine höhere Kennzeichnungsgeschwindigkeit erlaubt.

Erfindungsgemäß erfolgt die Lösung der Aufgabe durch das Verfahren gemäß Anspruch 1 und durch ein Scannermodul mit den Merkmalen gemäß Anspruch 5. Vorteilhafte Ausgestaltung bilden die Gegenstände der Unteransprüche.

Das erfindungsgemäße Verfahren setzt mindestens eine Lichtquelle sowie ein erstes und ein zweites Spiegelelement ein. Die Lichtquelle erzeugt einen Laserstrahl, der zur Kennzeichnung auf die Oberfläche des zu kennzeichnenden Gegenstandes gerichtet wird. Die Spiegelelemente sind jeweils um eine Achse drehbar gelagert und in ihrer Winkelstellung durch jeweils einen Antrieb verstellbar. Ferner ist eine Steuerung vorgesehen, die die Spiegelelemente ansteuert, um den von der Lichtquelle ausgehenden Laserstrahl über das erste und das zweite Spiegelelement zu einem Punkt bzw. entlang einer Linie auf dem Gegenstand zu lenken. Durch eine Abfolge solcher Punkte und Linien und die gewählte Verbindung zwischen diesen entsteht die gewünschte Kennzeichnung auf dem Gegenstand. Das Prinzip der Ansteuerung wird als sogenanntes Vektor-Laser-Markieren bezeichnet. Bei dem erfindungsgemäßen Verfahren wird eine erste Vorzugsrichtung für die vorzunehmende Kennzeichnung definiert. Sowohl für bewegte Gegenstände als auch für ruhende Gegenstände wird die aufzubringende Kennzeichnung in eine Vielzahl von Mikrovektoren zerlegt, die jeweils einen Bewegungsabschnitt des Laserstrahls auf dem Gegenstand darstellen. Die Steuerung ermittelt die erste Vorzugsrichtung durch Addition von mindestens einem Teil der Mikrovektoren. Der resultierende Vektor weist dann in die erste Vorzugsrichtung. Die erste und die zweite Achse der Spiegelelemente sind derart ausgerichtet, daß bei einer Bewegung einer der beiden Achsen der Laserstrahl auf der Oberfläche des Gegenstands eine Bewegung in eine Richtung beschreibt, die sowohl einen Anteil in der ersten bzw. zweiten Vorzugsrichtung als auch einen Anteil senkrecht zu dieser Vorzugsrichtung besitzt. Bei dem erfindungsgemäßen Verfahren sind also die Drehachsen der Spiegelelemente derart ausgerichtet, daß für eine Bewegung des Laserstrahls in Vorzugsrichtung eine Ansteuerung beider Antriebe zu erfolgen hat. Vorteil dieser Ansteuerung ist, daß eine Bewegung des Laserstrahls in Vorzugsrichtung aufgrund der vektoriellen Geschwindigkeitsaddition mit größerer Geschwindigkeit erfolgen kann. Für die Kennzeichnung von bewegten Gegenständen ist vorgesehen, die Bewegungsrichtung vektoriell zu der ermittelten ersten Vorzugsrichtung der Mikrovektoren zu addieren. Hierdurch entsteht eine überlagerte zweite Vorzugsrichtung, die bei der Kennzeichnung von bewegten Gegenständen eine Beschleunigung für das Auftragen der Markierung bringt.

Bei einem Strichcode verläuft die Vorzugsrichtung beispielsweise entlang der Erstreckungsrichtung der Striche eines Balken-Codes. Anders als bei der herkömmlichen Kennzeichnung, wo beispielsweise die Strichrichtung mit der Y-Richtung des Scannmoduls zusammenfällt, wird nun bei der erfindungsgemäßen Lösung die Bewegung entlang der Strichrichtung durch die überlagerte Ansteuerung beider Spiegel erzielt. Der Strichcode kann hierdurch deutlich schneller aufgebracht werden.

In einer bevorzugten Ausgestaltung sind die erste und die zweite Achse derart ausgerichtet, daß bei einer Bewegung um eine der beiden Achsen der auf den Gegenstand geworfene Laserstrahl sich in eine Richtung bewegt, die ungefähr einen 45°-Winkel mit der Vorzugsrichtung des Gegenstandes einschließt.

Erfindungsgemäß sind die Spiegelelemente und die mindestens eine Lichtquelle gemeinsam um eine Achse drehbar gelagert, die senkrecht zur Oberfläche des zu kennzeichnenden Gegenstandes steht. Durch eine Verdrehung des gesamten Scannermoduls um eine gemeinsame Achse können die Spiegelelemente in der Vorzugsrichtung ausgerichtet werden.

Zweckmäßiger Weise wird auch bei dem erfindungsgemäßen Scannermodul mit einer kartesischen Koordinatenzerlegung gearbeitet, bei der erste und zweite Achse senkrecht zueinander stehen.

Die erfindungsgemäße Vorrichtung wird nachfolgend anhand der Figuren näher erläutert. Es zeigt:
- Fig. 1: die erfindungsgemäße Beschriftungsvorrichtung mit einem gedrehten Scanner-modul und
- Fig. 2: ein nicht verdrehtes Scannermodul aus dem Stand der Technik.

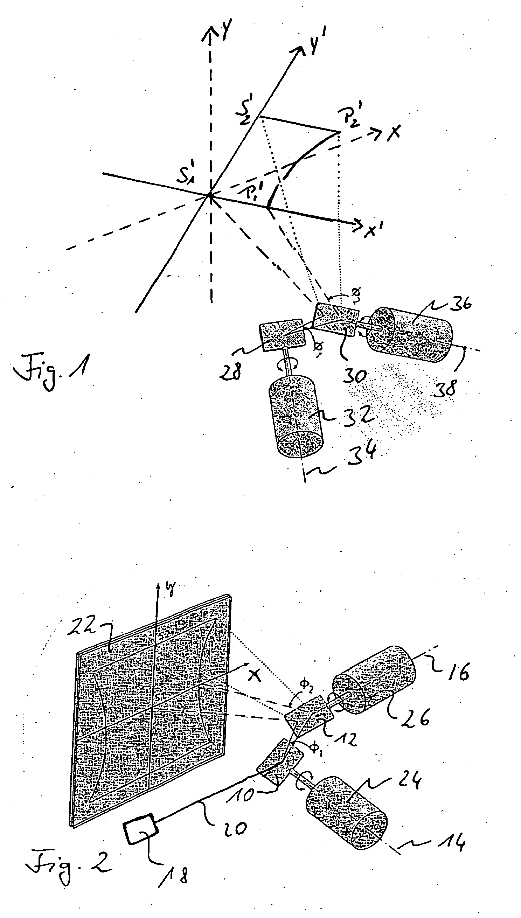

Zunächst sei mit Bezug auf Fig. 2 das Scannermodul aus dem Stand der Technik erläutert. Ein erster Spiegel 10 und ein zweiter Spiegel 12 sind jeweils um eine Achse 14 und 16 drehbar gelagert. Die Achsen 14 und 16 stehen senkrecht zueinander.

Ein Laser 18 erzeugt einen Laserstrahl 20, der auf den Spiegel 10 trifft. Durch eine Drehung des Spiegels 10 wird der Laserstrahl beispielsweise um einen Winkel Φ₁ abgelenkt. Der abgelenkte Laserstrahl trifft auf den Spiegel 12, der um die Achse 16 verstellbar ist.

Der so abgelenkte Laserstrahl trifft in der X-Y-Ebene 22 auf den zu beschriftenden Gegenstand. Betrachtet man nun die Beschriftung in dem ersten Quadranten, so ist hierzu eine Auslenkung beider Spiegel mit einem Winkel kleiner als die Winkel Φ₁, Φ₂ erforderlich gemacht. Bei einer Auslenkung von Null trifft der einfallende Laserstrahl 20 auf den Ursprung des Koordinatensystems S₁. Wird dann der erste Spiegel 10 um den Winkel Φ₂ ausgelenkt, wandert der Laserstrahl entlang der Strecke S₁P₁: Ist der erste Spiegel 10 um Φ₁ ausgelenkt und wird der zweite Spiegel 12 um Φ₂ gedreht, wandert der Laserstrahl entlang der eingezeichneten Kurve mit den Endpunkten P, und P₂. Die Kurve ist leicht konvex, wie sich aus der Geometrie bzw. dem veränderten Auftreffpunkt auf dem zweiten Spiegel ergibt. Dieses Phänomen wird als Feldverzerrung der Ablenkung bezeichnet. Ist der Spiegel 12 um Φ₂ ausgelenkt und wird der erste Spiegel 10 von Φ₁ wieder in die Null-Stellung gedreht, wandert der Laserstrahl entlang der Strecke P₂S₂. Durch ein Rückstellen des zweiten Spiegels 12 wandert der Laserstrahl entlang der Strecke S₂S₁.

Angetrieben werden die Spiegel 10 und 12 durch Galvanometer 24 und 26, die von einer nicht dargestellten Steuerung angesteuert werden.

Fig. 1 zeigt nun in einer perspektivischen Ansicht die erfindungsgemäße Ausrichtung der Spiegel 28 und 30. Zur besseren Übersicht wurde der Laser nicht dargestellt. Die Spiegel 28 und 30 sind jeweils über Galvanometer 32 und 34 um ihre Achsen 36, 38 drehbar gelagert. Um die gedrehte Position der Spiegelachsen 36 und 38 räumlich zu veranschaulichen wird wieder die Feldverzerrung im ersten Quadranten betrachtet. Befinden sich die Spiegel 28 und 30 in ihrer Null-Stellung, so wird der Laserstrahl in den Ursprung S₁', abgelenkt. Der Ursprung S₁' fällt mit dem Ursprung S 1 zusammen. Wird der Spiegel 28 durch das Galvanometer 32 um die Achse 34 um einen Winkel Φ₁ gedreht, so wandert der Laserstrahl auf der Objektfläche entlang der Strecke S₁'P₁'. Diese Bewegung erfolgt entlang der als X' bezeichneten Achse. Bezogen auf das nicht gedrehte Koordinatensystem X,Y besitzt die Bewegung entlang der Strecke S₁'P₁' sowohl eine Komponente in X-Richtung als auch eine Komponente in Y-Richtung. Wird bei ausgelenktem Spiegel 28 der Spiegel 30 um den Winkel Φ₂ verstellt, so wandert der Laserstrahl von dem Punkt P₁' zu dem Punkt P₂' entlang einer gekrümmten Kurve. Wird im Punkt P₂' nun der Spiegel 28 in seine Ursprungslage zurückgestellt, so wandert der Laserstrahl entlang der Strecke P₂'S₂' zurück entlang der gedrehten Koordinantenachse X'. Durch ein Zurückstellen des zweiten Spiegels 30 in seine Nullage wandert der Laserstrahl entlang der Strecke S₂'S₁' zurück in den Ursprung.

Für die weiteren Betrachtungen sei nunmehr angenommen, daß die nicht gedrehte X-Richtung die Vorzugsrichtung sei. Bei einer Beschriftung on-the-fly kann X beispielsweise die Bewegungsrichtung des Produkte sein. Für eine Beschriftung entlang der Vorzugsrichtung X ist es also notwendig, daß sowohl Galvanometer 32 als auch Galvanometer 36 des zweiten Spiegels 30 angesteuert werden. Durch die gemeinsame Ansteuerung der Spiegel 28 und 30 kann der Laserstrahl schneller in Richtung der X-Achse bewegt werden. Sind die Achsen X'Y' um 45° gegenüber den Achsen X, Y gedreht, so kann die Geschwindigkeit des Galvanometers 32 zur Kompensation der Vorschubbewegung um den Faktor √2/2 reduziert werden.

Neben dem vorgenannten Beispiel, bei dem die Lage des Scannermoduls relativ an die Bewegungsrichtung angepaßt wurde, kann auch die Anordnung des Scannermoduls relativ zum Produkt speziell an die Geometrie der aufzubringenden Kennzeichnung angepaßt werden, wodurch die Prozeßzeit ebenfalls deutlich verkürzt wird. Jede Kennzeichnung wird vorab von der Steuerung in sogenannte Mikrovektoren zerlegt, die von dem Laserstrahl dann abgefahren werden. Anhand der Häufigkeitsverteilung dieser Mikrovektoren wird eine Vorzugsrichtung für die Kennzeichnung definiert. Diese kann beispielsweise durch Addition sämtlicher Mikrovektoren zu einem resultierenden Vektor bestimmt werden. Nachfolgend wird das Scannermodul so zum Objekt ausgerichtet, daß die Vorzugsrichtung sich vektoriell aus einer Bewegung beider Galvanometer 32 und 36 zusammensetzt. Die Mikrovektoren, die am häufigsten in der Kennzeichnung vorkommen, werden dann mit der höchsten Geschwindigkeit von beiden Galvanometerantrieben 32 und 36 abgefahren. Durch die vektorielle Überlagerung kann eine Markierungsgeschwindigkeit auf dem Produkt erzielt werden, die um das √2-fache über der Höchstgeschwindigkeit eines einzelnen Galvanometers liegt.

## Patentansprüche

1. Verfahren zur Kennzeichnung von Gegenständen mit einem Laserstrahl, unter Verwendung von:
- mindestens einer Lichtquelle, die einen Laserstrahl erzeugt,
- einem ersten Spiegelelement (28), das um eine erste Achse (36) drehbar gelagert und dessen Winkelstellung durch einen ersten Antrieb (32) stellbar ist,
- einem zweiten Spiegelelement (30), das um eine zweite Achse (38) drehbar gelagert und dessen Winkelstellung durch einen zweiten Antrieb (34) stellbar ist, und
- einer Steuerung, die die Antriebe der Spiegelelemente derart ansteuert, daß ein von der Lichtquelle ausgehender Laserstrahl über das erste und das zweite Spiegelelement entlang einer Linie auf den zu beschriftenden Gegenstand gelenkt wird,
**dadurch gekennzeichnet, daß**
- die Steuerung die Geometrie der aufzubringenden Kennzeichnung in eine Vielzahl von Mikrovektoren zerlegt, die jeweils einen Bewegungsabschnitt des Laserstrahls auf dem Gegenstand repräsentieren, und mindestens einen Teil der Mikrovektoren zu einem resultierenden Vektor aufaddiert, der eine erste Vorzugsrichtung der Kennzeichnung bildet und für bewegte Gegenstände die Bewegungsrichtung vektoriell zu der ersten Vorzugsrichtung addiert, um eine zweite Vorzugsrichtung zu bestimmen, und
- die erste und zweite Achse ausgerichtet werden derart, daß bei einer Bewegung eines Spiegelelements um eine Achse der Laserstrahl auf dem Gegenstand eine Bewegung in eine Richtung beschreibt, die sowohl einen Anteil in die erste bzw. zweite Vorzugsrichtung als auch einen Anteil senkrecht zu dieser Vorzugsrichtung aufweist.

2. Verfahren nach Anspruch 1, **dadurch gekennzeichnet, daß** die erste und die zweite Achse derart ausgerichtet sind, daß bei einer Bewegung um eine der beiden Achsen der auf den Gegenstand geworfene Laserstrahl sich in eine Richtung bewegt, die ungefähr einen 45°-Winkel mit der ersten bzw. zweiten Vorzugsrichtung einschließt.

3. Verfahren nach Anspruch 1 oder 2, **dadurch gekennzeichnet, daß** die Spiegelelemente und die mindestens eine Lichtquelle gemeinsam um eine Achse drehbar gelagert sind, die senkrecht zur Oberfläche des zu kennzeichnenden Gegenstandes steht.

4. Verfahren nach einem der Ansprüche 1 bis 3, **dadurch gekennzeichnet, daß** die erste Achse (36) senkrecht zur zweiten Achse (38) steht.

5. Vorrichtung zur Kennzeichnung von Gegenständen, mit einem Laserstrahl,
- mindestens einer Lichtquelle, die einen Laserstrahl erzeugt,
- einem ersten Spiegelelement (28), das um eine erste Achse (36) drehbar gelagert und dessen Winkelstellung durch einen ersten Antrieb (32) stellbar ist,
- einem zweiten Spiegelelement (30), das um eine zweite Achse (38) drehbar gelagert und dessen Winkelstellung durch einen zweiten Antrieb (34) stellbar ist, und
- einer Steuerung, die die Antriebe der Spiegelelemente derart ansteuert, daß ein von der Lichtquelle ausgehender Laserstrahl über das erste und das zweite Spiegelelement entlang einer Linie auf den zu beschriftenden Gegenstand gelenkt wird,
**dadurch gekennzeichnet, daß**
- die Steuerung die Geometrie der aufzubringenden Kennzeichnung in eine Vielzahl von Mikrovektoren zerlegt, die jeweils einen Bewegungsabschnitt des Laserstrahls auf dem Gegenstand repräsentieren, und mindestens einen Teil der Mikrovektoren zu einem resultierenden Vektor aufaddiert, der eine erste Vorzugsrichtung der Kennzeichnung bildet und für bewegte Gegenstände die Bewegungsrichtung vektoriell zu der ersten Vorzugsrichtung addiert, um eine zweite Vorzugsrichtung zu bestimmen, und
- wobei die Lichtquelle, das erste und zweite Spiegelelement zur Ausrichtung relativ zu der ersten bzw, der zweiten Vorzugsrichtung um eine Achse gemeinsam drehbar gelagert sind.

6. Vorrichtung nach Anspruch 5, **dadurch gekennzeichnet, daß** die erste und die zweite Achse derart ausgerichtet sind, daß bei einer Bewegung um eine der beiden Achsen der auf den Gegenstand geworfene Laserstrahl sich in eine Richtung bewegt, die ungefähr einen 45°-winkel mit der ersten bzw. zweiten Vorzugsrichtung einschließt.

7. Vorrichtung nach Anspruch 5 oder 6, **dadurch gekennzeichnet, daß** die Achse, um die die Spiegelelemente und die mindestens eine Lichtquelle drehbar gelagert sind, senkrecht zur Oberfläche des zu kennzeichnenden Gegenstandes steht.

8. Vorrichtung nach einem der Ansprüche 5 bis 7. **dadurch gekennzeichnet, daß** die erste Achse (36) senkrecht zur zweiten Achse (38) steht.

## Claims

1. A method for labeling of objects with a laser beam, using:
- at least one light source, which generates a laser beam,
- a first mirror element (28), which is pivotably supported about a first axis (36), and whose angular position can be adjusted by a first drive (32),
- a second mirror element (30), which is pivotably supported about a second axis (38) and whose angular position can be adjusted by a second drive (34), and
- a control, which controls the drives of the mirror elements in such a way that a laser beam emanating from the light source is guided via the first and the second mirror element along a line onto the object that is to be marked,
**characterized in that**,
- the control breaks down the geometry of the labeling to be applied into a plurality of micro-vectors, which each represent a section of movement of the laser beam upon the object, and adds up at least a portion of the micro-vectors to a resulting vector, which forms a first preferred direction of the labeling, and for moving objects vectorially adds the direction of movement to the first preferred direction, in order to specify a second preferred direction, and
- the first and the second axis are oriented in such a way that during a movement of a mirror element about an axis, the laser beam delineates on the object a movement in a direction, which has a portion in the first or second preferred direction, as well as a portion orthogonal to this preferred direction.

2. The method according to claim 1, **characterized in that** the first and the second axis are oriented such that during a movement about one of the two axes, the laser beam projected onto the object moves in a direction, which encloses an angle of approximately 45° with the first or second preferred direction.

3. The method according to claims 1 or 2, **characterized in that** the mirror elements and the at least one light source collectively are pivotably supported about an axis, which is orthogonal to the surface of the object to be labeled.

4. The method according to one of the claims 1 to 3, **characterized in that** the first axis (36) is perpendicular to the second axis (38).

5. A device for labeling of objects with a laser beam,
- at least one light source, which generates a laser beam,
- a first mirror element (28), which is pivotably supported about a first axis (36) and whose angular position can be adjusted by a first drive (32),
- a second mirror element (30), which is pivotably supported about a second axis (38) and whose angular position can be adjusted by a second drive (34), and
- a control, which controls the drives of the mirror elements in such a way that a laser beam emanating from the light source is guided via the first and the second mirror element along a line onto the object that is to be marked,
**characterized in that**,
- the control breaks down the geometry of the labeling to be applied into a plurality of micro-vectors, which each represent a section of movement of the laser beam upon the object, and adds up at least a portion of the micro-vectors to a resulting vector, which forms a first preferred direction of the labeling, and for moving objects vectorially adds the direction of movement to the first preferred direction, in order to specify a second preferred direction, and
- wherein the light source, the first and second mirror element collectively are pivotably supported about an axis for orienting relative to the first or the second preferred direction.

6. The device according to claim 5, **characterized in that** the first and the second axis are oriented such that during a movement about one of the two axes, the laser beam projected onto the object moves in a direction, which encloses an angle of approximately 45° with the first or second preferred direction.

7. The device according to claims 5 or 6, **characterized in that** the axis about which the mirror elements and the at least one light source are pivotably supported is orthogonal to the surface of the object to be labeled.

8. The device according to one of the claims 5 to 7, **characterized in that** the first axis (36) is perpendicular to the second axis (38).

## Revendications

1. Procédé de marquage d'objets avec un faisceau laser, utilisant
- au moins une source lumineuse qui produit un faisceau laser,
- un premier élément de miroir (28) qui est logé de façon rotative autour d'un premier axe (36), et dont la position angulaire est réglable par un premier entraînement (32),
- un second élément de miroir (30) qui est logé de façon rotative autour d'un second axe (38), et dont la position angulaire est réglable par un second entraînement (34), et
- une commande qui actionne les entraînements des éléments de miroir, de sorte qu'un faisceau laser provenant de la source lumineuse via les premier et second éléments de miroir est dirigé le long d'une ligne sur l'objet à marquer,
**caractérisé en ce que**
- la commande décompose la géométrie du marquage à appliquer en une pluralité de microvecteurs qui représentent respectivement un segment de mouvement du faisceau laser sur l'objet, et additionne au moins une partie des microvecteurs pour produire un vecteur total qui forme une première direction préférée du marquage et ajoute pour des objets déplacés la direction de mouvement vectoriellement à la première direction préférée pour déterminer une seconde direction préférée, et
- les premier et second axes sont orientés de telle sorte que lors d'un mouvement d'un élément de miroir autour d'un axe le faisceau laser sur l'objet décrit un mouvement dans une direction qui présente non seulement une partie dans la première et/ou seconde direction préférée, mais aussi une partie perpendiculaire à cette direction préférée.

2. Procédé selon la revendication 1, **caractérisé en ce que** les premier et second axes sont orientés de telle sorte que lors d'un mouvement autour d'un des deux axes le faisceau laser projeté sur l'objet se déplace dans une direction qui inclut approximativement un angle de 45° avec la première et/ou la seconde direction préférée.

3. Procédé selon la revendication 1 ou 2, **caractérisé en ce que** les éléments de miroir et la au moins une source lumineuse sont logés conjointement autour d'un axe situé perpendiculairement à la surface de l'objet à marquer.

4. Procédé selon l'une des revendications 1 à 3, **caractérisé en ce que** le premier axe (36) est situé perpendiculairement au second axe (38).

5. Dispositif de marquage d'objets, avec un faisceau laser,
- au moins une source lumineuse qui produit un faisceau laser,
- un premier élément de miroir (28) qui est logé de façon rotative autour d'un premier axe (36) et dont la position angulaire est réglable par un premier entraînement (32),
- un second élément de miroir (30) qui est logé de façon rotative autour d'un second axe (38) et dont la position angulaire est réglable par un second entraînement (34), et
- une commande qui actionne les entraînements des éléments de miroir, de sorte qu'un faisceau laser provenant de la source lumineuse via les premier et second éléments de miroir est dirigé le long d'une ligne sur l'objet à marquer,
**caractérisé en ce que**
- la commande décompose la géométrie du marquage à appliquer en une pluralité de microvecteurs qui représentent respectivement un segment de mouvement du faisceau laser sur l'objet, et additionne au moins une partie des microvecteurs pour produire un vecteur total qui forme une première direction préférée du marquage et ajoute pour des objets déplacés la direction de mouvement vectoriellement à la première direction préférée pour déterminer une seconde direction préférée, et
- la source lumineuse, les premier et second éléments de miroir en vue de l'alignement par rapport à la première et/ou la seconde direction préférée étant situés rotatifs conjointement autour d'un axe.

6. Dispositif selon la revendication 5, **caractérisé en ce que** les premier et second axes sont orientés de telle sorte que lors d'un mouvement autour d'un des deux axes le faisceau laser projeté sur l'objet se déplace dans une direction qui inclut approximativement un angle de 45° avec la première et/ou la seconde direction préférée.

7. Dispositif selon la revendication 5 ou 6, **caractérisé en ce que** l'axe, autour duquel sont logés de façon rotative les éléments de miroir et la au moins une source lumineuse, est situé perpendiculairement à la surface de l'objet à marquer.

8. Dispositif selon l'une des revendications 5 à 7, **caractérisé en ce que** le premier axe (36) est situé perpendiculairement au second axe (38).
